# EUROPÄISCHE PATENTSCHRIFT

(11) **EP 1 284 894 B1**
(45) Veröffentlichungstag und Bekanntmachung des Hinweises auf die Patenterteilung: **06.10.2004**
(21) Anmeldenummer: 01944945.3
(22) Anmeldetag: 17.05.2001
(51) Int. Cl.: B60R 25/00, E05B 49/00

(54) **VERFAHREN ZUM ERKENNEN DER LAGE EINES TRAGBAREN TRANSPONDERS SOWIE EIN DIEBSTAHLSCHUTZSYSTEM**
METHOD FOR THE RECOGNITION OF THE POSITION OF A PORTABLE TRANSPONDER AND A THEFT PROTECTION SYSTEM
PROCEDE DE DETECTION DE LA POSITION D'UN TRANSPONDEUR PORTABLE ET SYSTEME ANTIVOL

(30) Priorität: 26.05.2000 DE 10026271
(43) Veröffentlichungstag der Anmeldung: 26.02.2003
(73) Patentinhaber: SIEMENS AKTIENGESELLSCHAFT, 80333 München (DE)
(72) Erfinder: BUCHNER, Reiner, 93161 Sinzing (DE)
(86) Internationale Anmeldenummer: PCT/DE2001/001889
(87) Internationale Veröffentlichungsnummer: WO 2001/089887

(56) Entgegenhaltungen:
- EP-A- 0 980 800

## Beschreibung

Verfahren zum Erkennen eines tragbaren Antwortgebers als im Nahbereich einer Sendeantenne einer Basisstation befindlich sowie ein Diebstahlschutzsystem

Die Erfindung betrifft ein Verfahren zum Erkennen eines tragbaren Antwortgebers als im Nahbereich einer Sendeantenne einer Basisstation befindlich sowie ein Diebstahlschutzsystem für ein Kraftfahrzeug.

Ein Problem, das sich bei Diebstahlschutzsystemen für Kraftfahrzeuge stellt, die mittels drahtloser Kommunikation zwischen einer fahrzeugfesten Basisstation und einem tragbaren Antwortgeber arbeiten, ist Folgendes:

Die Sendeleistung der Basisstation und des Antwortgebers sind meistens derart festgelegt, dass Signale von der Basisstation nur in einem Nahbereich, d.h. dem unmittelbaren Sendebereich der Sendeantenne der Basisstation von dem Antwortgeber empfangen werden und auch Signale des Antwortgebers nur dann von der Basisstation empfangen werden, wenn sich der Antwortgeber im Nahbereich befindet. Durch Manipulation ist es möglich, die Kommunikationsstrecke zwischen Basisstation und Antwortgeber abzuhören und die Signale aus weiter Entfernung wiederzugeben.

Das Dokument EP-A-980 800 offenbart ein Verfahren und ein Diebstahlschutzsystem zum Erkennen eines tragbaren Antwortgebers gemäß dem Oberbegriff des Ansprüche 1 und 4.

Der Erfindung liegt die Aufgabe zu Grunde, Abhilfe für das vorgenannte Problem zu schaffen.

Eine erste Lösung dieser Aufgabe wird mit einem Verfahren gemäß dem Hauptanspruch erzielt.

Erfindungsgemäß wird der Basisstation von dem Antwortgeber die Feldstärke bzw. Intensität mitgeteilt, mit der der Antwortgeber ein von der Basisstation mit vorbestimmter Leistung gesendetes erstes Testsignal empfängt. Anschließend sendet der Antwortgeber ein zweites Testsignal mit einer vorbestimmten Leistung. In der Basisstation wird die Feldstärke bestimmt, mit der dieses zweite Testsignal empfangen wird. Durch den Vergleich der beiden Feldstärken ist es möglich, zu entscheiden, ob sich der Antwortgeber im Nahbereich bzw. unmittelbaren Sendebereich der Sendeantenne der Basisstation befindet oder nicht. Wird festgestellt, dass sich der Antwortgeber außerhalb des Nahbereichs befindet, können die von der Basisstation auf Grund von vom Antwortgeber empfangenen Signalen ausgelösten Funktionen gesperrt werden.

Das erfindungsgemäße Verfahren eignet sich somit für alle Anwendungen, bei denen irgendwelche Funktionen von einer Basisstation aus oder von einem Antwortgeber aus ausgelöst werden können, dies aber nur erfolgen soll, wenn sich Antwortgeber und Basisstation im gegenseitigen unmittelbaren Sendebereich befinden.

Mit den Merkmalen des Anspruchs 2 wird die Sicherheit vor Manipulationen weiter verbessert.

Der Anspruch 3 ist auf eine vorteilhafte Durchführungsform des Verfahrens gerichtet, mit der sichergestellt ist, dass der Antwortgeber sich zwischen der Auswertung der beiden Testsignale praktisch nicht bewegt.

Der Anspruch 4 kennzeichnet den grundsätzlichen Aufbau eines Diebstahlschutzsystems für Kraftfahrzeuge zur Lösung der Erfindungsaufgabe.

Die Erfindung wird im Folgenden anhand schematischer Zeichnungen beispielsweise und mit weiteren Einzelheiten erläutert.

Es stellen dar:
- Fig. 1: ein Blockschaltbild mit einer Basisstation und einem Antwortgeber und
- Fig. 2: ein Flussdiagramm zur Erläuterung des erfindungsgemäßen Verfahrens.

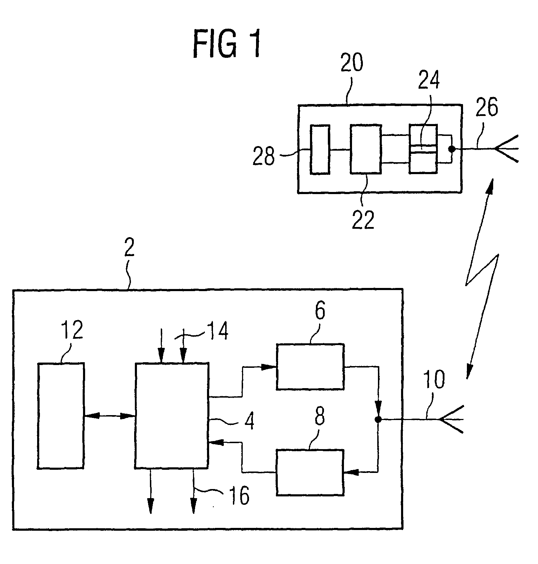

Gemäß Fig. 1 weist eine beispielsweise in einem Kraftfahrzeug installierte Basisstation 2 eines Diebstahlschutzsystems einen Mikroprozessor 4 auf, der über eine Sendeeinheit 6 und eine Empfangseinheit 8 mit einer Antenne 10 verbunden ist und zum Austausch von Daten mit einem Datenspeicher 12 geeignet ist. Weitere Eingänge des Mikroprozessors 4 sind mit 14 bezeichnet; weitere Ausgänge sind mit 16 bezeichnet.

Die Basisstation 2 ist in das Bordnetz eines Kraftfahrzeugs integriert und löst, je nach den Signalen an seinen Eingängen 14 bestimmte Abläufe aus, die dann über die Ausgänge 16 zu bestimmten Funktionen im Fahrzeug führen.

Ein Antwortgeber 20 enthält einen Mikroprozessor 22, eine Sende-/Empfangseinheit 24, eine Sende-/Empfangsantenne 26 und einen Speicher 28. Nicht dargestellt ist eine Stromversorgung für die genannten Einheiten.

Aufbau und Funktion der genannten Bausteine sowie deren Zusammenwirken in einem Diebstahlschutzsystem für ein Kraftfahrzeug sind an sich bekannt und werden daher nicht im einzelnen erläutert. Eine beispielhafte Funktion besteht darin, dass die Basisstation 2, wenn an den Eingängen 14 ein von einem Annäherungssensor oder beispielsweise durch Ziehen an einem Türgriff erzeugtes Signal liegt, ein Anfragesignal sendet, auf dessen Empfang hin der Antwortgeber 20 mit einem Antwortsignal antwortet, das eine in dem Antwortgeber 20 gespeicherte Codeinformation enthält. Diese Codeinformation wird nach Empfang von der Basisstation 2 mit einer dort gespeicherten Codeinformation verglichen und bei positivem Vergleich wird beispielsweise ein Zugang zum Fahrzeug freigegeben.

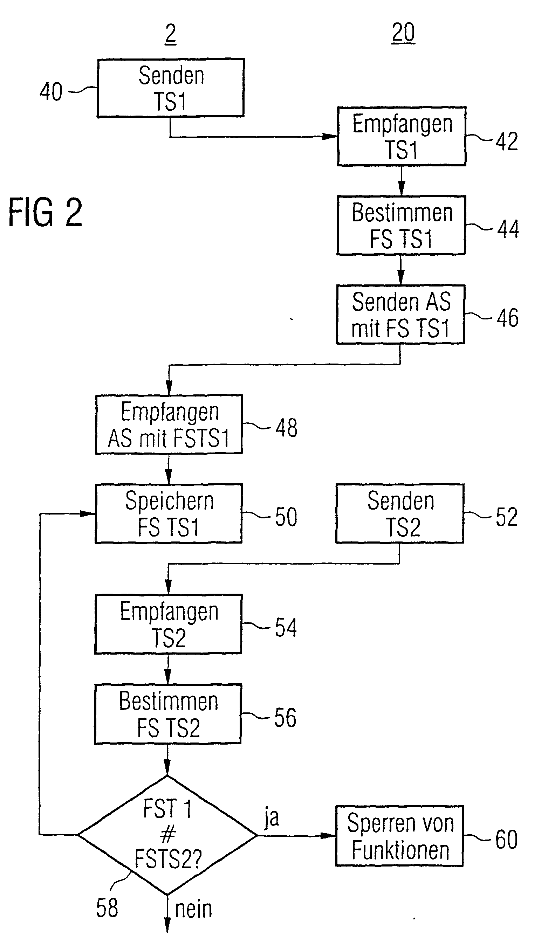

Die Reichweite der von der Basisstation über deren Antenne 10 gesendeten Signale ist verhältnismäßig kurz und beträgt beispielsweise weniger als 100 m. Zur Überprüfung, ob sich der Antwortgeber 20 tatsächlich innerhalb des Nahbereiches der Basisstation 2 befindet und die Reichweite bzw. Kommunikationsstrecke nicht durch Manipulation vergrößert ist, läuft ein, beispielsweise vom Mikroprozessor 4 bei Vorliegen bestimmter Bedingungen, wie z.B. von der Freigabe eines Zugangs zum Fahrzeug, ausgelöster Kommunikationszyklus ab, der an Hand der Fig. 2 erläutert wird:

In einem ersten Schritt 40 sendet die Basisstation 40 ein erstes Testsignal TS1 mit vorbestimmter Leistung. Dieses erste Testsignal wird im Schritt 42 normalerweise von dem Antwortgeber 20 empfangen, woraufhin im Antwortgeber 20 im Schritt 44 die Feldstärke des ersten Testsignals bestimmt wird. Im Schritt 46 sendet der Antwortgeber 20 ein Antwortsignal mit Information über die Feldstärke, mit der das erste Testsignal empfangen wurde. (Sendet der Antwortgeber kein Antwortsignal, so wird eine gegebenenfalls gerade freigegebene Funktion gesperrt). Im Schritt 48 empfängt die Basisstation 2 das Antwortsignal mit der Information über die Feldstärke, mit der das erste Testsignal von dem Antwortgeber 20 empfangen wurde. Im Schritt 50 speichert die Basisstation 2 die Information über die Feldstärke, mit der das erste Testsignal empfangen wurde, in dem Speicher 12 (Fig. 1).

Im Schritt 52 sendet der Antwortgeber 20 beispielsweise mit einer vorbestimmten kurzen zeitlichen Verzögerung gegenüber dem im Schritt 46 gesendeten Antwortsignal ein zweites Testsignal TS2 mit vorbestimmter Leistung. Dieses zweite Testsignal TS2 wird im Schritt 54 von der Basisstation 2 empfangen und im Schritt 56 wird die Feldstärke bestimmt, mit der das zweite Testsignal empfangen wurde.

Im Schritt 58 wird die Feldstärke, mit der das erste Testsignal vom Antwortgeber 20 empfangen wurde, mit der Feldstärke verglichen, mit der das zweite Testsignal von der Basisstation 2 empfangen wurde. Übersteigt die Abweichung der beiden Feldstärken ein vorbestimmtes Maß, so wird dies dahingehend gewertet, dass sich der Antwortgeber 20 außerhalb des Nahbereiches der Basisstation 2 befindet und es werden im Schritt 60 Funktionen gesperrt, die normalerweise mit einer positiven Berechtigungsüberprüfung des Antwortgebers auslösbar sind. Andernfalls wird der Antwortgeber als korrekt im Nahbereich befindlich gewertet, so dass das Diebstahlschutzsystem wie üblich funktioniert.

Anhand des Feldstärkevergleiches kann aus folgenden Gründen auf den Ort des Antwortgebers geschlossen werden:

Sei angenommen, die Leistungen, mit denen die beiden Testsignale gesendet werden, sind gleich und die Wirkungsgrade der Antennen sind ebenfalls gleich. In diesem Fall müssen die Feldstärken gleich groß sein.

Wenn die Leistungen, mit denen die Testsignale gesendet werden, gleich sind, aber beispielsweise der Sendewirkungsgrad der Antenne des Antwortgebers schlechter ist, so ist dieser schlechtere Wirkungsgrad dem System bekannt und kann bei dem Vergleich berücksichtigt werden. Es ist außerordentlich unwahrscheinlich, dass eine zusätzliche Sende-/Empfangseinheit, die zur Manipulation verwendet wird, genau den gleichen Sendewirkungsgrad hat, so dass sich bei einer Manipulation eine andere Abweichung der beiden Feldstärken ergibt. In ähnlicher Weise kann das Testsignal, das vom Antwortgeber gesendet wird, eine dem System bekannte schwächere Sendeleistung haben, die ebenfalls bei dem Vergleich berücksichtigt wird.

Das System kann in vielfältiger Weise abgeändert und ergänzt werden:

Beispielsweise kann das im Schritt 46 gesendete Antwortsignal unmittelbar das Testsignal 2 sein, so dass die Schritte 46 und 52 zusammenfallen und die Schritte 48, 50, 54 und 56 parallel erfolgen können. Das System kann mehrere Antwortgeber enthalten, die über ihre Codes gezielt ansprechbar sind, so dass deren getrennte Auswertung im Hinblick auf ihr Befinden im Nahbereich möglich ist. Der Datenträger kann als Transponder ohne eigene Energieversorgung aufgebaut sein. Vorteilhafterweise wird die in dem im Schritt 46 gesendeten Antwortsignal enthaltene Information über die Feldstärke, mit der das Testsignal im Schritt 42 empfangen wurde, verschlüsselt, so dass externe Dritte diese Information nicht aktivieren können und dann zur Manipulation der Sendeleistung des vom Antwortgeber gesendeten Testsignals benutzen könnten. Mit dem vom Antwortgeber gesendeten Testsignal könnte eine Information über dessen Sendestärke gesendet werden, anhand der die Basisstation die Entfernung des Antwortgebers ermittelt. Es versteht sich, dass auch diese Information vorteilhafterweise verschlüsselt gesendet wird.

## Patentansprüche

1. Verfahren zum Erkennen eines tragbaren Antwortgebers (20) als im Nahbereich einer Sendeantenne (10) einer Basisstation (2) befindlich, wobei
die Basisstation (2) ein erstes Testsignal mit einer definierten Leistung sendet,
der Antwortgeber die Feldstärke bestimmt, mit der er das erste Testsignal empfängt und ein die Feldstärke des ersten Testsignals enthaltendes Antwortsignal an die Basisstation sendet,
die Basisstation die Feldstärke speichert, mit der der Antwortgeber das erste Testsignal empfangen hat, **dadurch gekennzeichnet, daß** der Antwortgeber ein zweites Testsignal mit einer definierten Leistung sendet, daß
die Basisstation die Feldstärke bestimmt, mit der sie das zweite Testsignal empfängt,
und aus einem Vergleich der beiden Feldstärken hergeleitet wird, ob sich der Antwortgeber im Nahbereich der Sendeantenne der Basisstation befindet.

2. Verfahren nach Anspruch 1, wobei die in dem Antwortsignal enthaltene Information über die Feldstärke des ersten Testsignals verschlüsselt ist.

3. Verfahren nach Anspruch 1 oder 2, wobei der Antwortgeber (20) das Antwortsignal im wesentlichen gleichzeitig mit dem zweiten Testsignal sendet.

4. Diebstahlschutzsystem für ein Kraftfahrzeug, enthaltend eine fahrzeugfeste Basisstation (2) mit einer Sende/Empfangseinheit (6, 8) für eine drahtlose Kommunikation mit einer Sende-/Empfangseinheit (24) eines tragbaren Antwortgebers (20), auf dem eine Codeinformation gespeichert ist, die vom Antwortgeber zur Berechtigungsüberprüfung an die Basisstation sendbar ist, wobei bestimmte Fahrzeugfunktionen erst nach positiver Berechtigungsüberprüfung freigegeben werden, welche Basisstation (2) und welcher Antwortgeber (20) derart ausgebildet sind, dass von der Basisstation ein erstes Testsignal mit vorbestimmter Leistung gesendet wird,
der Antwortgeber die Feldstärke bestimmt, mit der er das erste Testsignal empfängt und ein Antwortsignal mit einer Information über diese Feldstärke sendet,
die Basisstation die empfangene Information über die Feldstärke in einer Speichereinrichtung (12) speichert, **dadurch gekennzeichnet daß** der Antwortgeber ein zweites Testsignal mit vorbestimmter Leistung sendet, daß
die Basisstation die Feldstärke bestimmt, mit der das zweite Testsignal empfangen wird, die empfangene Feldstärke mit der gespeicherten Feldstärke vergleicht und den Antwortgeber bei einer ein vorbestimmtes Maß übersteigenden Abweichung als außerhalb des Nahbereiches der Sendeantenne (10) der Basisstation (2) befindlich wertet.

## Claims

1. Method for identifying a portable transponder (20) as being located in the near area of a transmitting antenna (10) of a base station (2), in which
the base station (2) sends a first test signal with a defined power level,
the transponder determines the field strength with which it receives the first test signal and sends a response signal, which contains the field strength of the first test signal, to the base station,
the base station stores the field strength with which the transponder has received the first test signal, **characterized in that**
the transponder sends a second test signal with a defined power level, **in that**
the base station determines the field strength with which it receives the second test signal,
and the two field strengths are compared in order to determine whether the transponder is located in the near area of the transmitting antenna of the base station.

2. Method according to Claim 1, in which the information contained in the response signal relating to the field strength of the first test signal is encrypted.

3. Method according to Claim 1 or 2, in which the transponder (20) sends the response signal essentially at the same time as the second test signal.

4. Antitheft system for a motor vehicle, containing a base station (2) which is fixed to the vehicle and having a transmitting/receiving unit (6, 8) for wire-free communication with a transmitting/receiving unit (24) of a portable transponder (20) in which code information is stored, which can be sent from the transponder to the base station for authorization checking, with specific vehicle functions being enabled only after a positive authorization check,
which base station (2) and which transponder (20) are designed such that the base station sends a first test signal with a predetermined power level,
the transponder determines the field strength with which it receives the first test signal and sends a response signal with information about this field strength,
the base station stores the received information about the field strength in a memory device (12), **characterized in that** the transponder sends a second test signal with a predetermined power level, **in that** the base station determines the field strength with which the second test signal is received, compares the received field strength with the stored field strength and, in the event of any discrepancy which is greater than a predetermined level, assesses that the transponder is located outside the near area of the transmitting antenna (10) of the base station (2).

## Revendications

1. Procédé permettant de détecter si un répondeur portable (20) comme se trouvant dans la zone rapprochée d'une antenne émettrice (10) d'une station de base (2), dans lequel
la station de base (2) émet un premier signal de test avec une puissance définie,
le répondeur détermine l'intensité de champ avec laquelle il reçoit le premier signal de test et transmet à la station de base un signal de réponse contenant l'intensité de champ du premier signal de test,
la station de base met en mémoire l'intensité de champ avec laquelle le répondeur a reçu le premier signal de test,
**caractérisé en ce que**
le répondeur émet un deuxième signal de test avec une puissance définie,
la station de base détermine l'intensité de champ avec laquelle elle reçoit le deuxième signal de test,
et **en ce qu'**on détermine par déduction, à partir d'une comparaison des deux intensités de champ, si le répondeur se trouve dans la zone rapprochée de l'antenne émettrice de la station de base.

2. Procédé selon la revendication 1, dans lequel l'information sur l'intensité de champ du premier signal de test contenue dans le signal de réponse est une information codée.

3. Procédé selon la revendication 1 ou 2, dans lequel le répondeur (20) émet le signal de réponse sensiblement en même temps que le deuxième signal de test.

4. Système de protection antivol pour un véhicule automobile, comportant une station de base (2), installée de manière fixe dans le véhicule, avec une unité émettrice/réceptrice (6, 8) assurant une communication sans fil avec une unité émettrice/réceptrice (24) d'un répondeur portable (20), dans lequel est stockée une information codée qui peut être transmise par le répondeur à la station de base dans le but de procéder à une vérification d'autorisation, certaines fonctions du véhicule n'étant libérées que si la vérification de l'autorisation est positive,
ladite station de base (2) et ledit répondeur (20) étant conçus de telle sorte qu'un premier signal de test de puissance prédéterminée est émis par la station de base,
le répondeur déterminant l'intensité de champ avec laquelle il reçoit le premier signal de test et un signal de réponse étant émis avec une information sur cette intensité de champ,
la station de base stockant l'information reçue sur l'intensité de champ dans un dispositif de mémoire (12),
**caractérisé en ce que**
le répondeur émet un deuxième signal de test de puissance prédéfinie,
la station de base détermine l'intensité de champ avec laquelle le deuxième signal de test est reçu, compare l'intensité de champ reçue à l'intensité de champ mise en mémoire et, lorsque la différence dépasse une grandeur prédéfinie, considère que le répondeur se trouve à l'extérieur de la zone rapprochée de l'antenne émettrice (10) de la station de base (2).
